(19) Europäisches Patentamt
European Patent Office
Office européen des brevets

(11) EP 1 753 797 B1

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(21) Anmeldenummer: **05750544.8**

(22) Anmeldetag: **17.05.2005**

(51) Int Cl.:
***C08G 2/10*** *(2006.01)* ***C08J 11/02*** *(2006.01)*
***C08L 59/00*** *(2006.01)*

(86) Internationale Anmeldenummer:
**PCT/EP2005/005335**

(87) Internationale Veröffentlichungsnummer:
**WO 2005/113623 (01.12.2005 Gazette 2005/48)**

(54) **VERFAHREN ZUR ENTFERNUNG VON RESTMONOMEREN AUS POLYOXYMETHYLENEN**

METHOD FOR REMOVING RESIDUAL MONOMERS FROM POLYOXYMETHYLENES

PROCEDE POUR ELIMINER DES MONOMERES RESIDUELS DE POLYOXYMETHYLENES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.05.2004 DE 102004025366**

(43) Veröffentlichungstag der Anmeldung:
**21.02.2007 Patentblatt 2007/08**

(73) Patentinhaber: **BASF Aktiengesellschaft**
**67056 Ludwigshafen (DE)**

(72) Erfinder:
- **SCHWITTAY, Claudius**
**69121 Heidelberg (DE)**
- **STÖCKELMANN, Elmar**
**68165 Mannheim (DE)**
- **HEINEMANN, Johannes**
**68169 Mannheim (DE)**
- **ZÖLLNER, Knut**
**68165 Mannheim (DE)**
- **STAMMER, Achim**
**67251 Freinsheim (DE)**

(56) Entgegenhaltungen:
**DE-A1- 3 231 797** **GB-A- 1 048 902**
**GB-A- 1 205 187**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Entfernung von nicht umgesetzten Restmonomeren aus Polyoxymethylenhomo- oder -copolymeren mit folgenden Verfahrensschritten:

a) in einer Entgasungsvorrichtung werden aus dem Polymeren die Restmonomere als Brüden bei einer Temperatur von 70 bis 300°C und einem Druck von 0,005 bis 50 bar gasförmig abgezogen,

b) durch eine Brüdenleitung werden die Restmonomerbrüden abgeleitet, wobei die Brüdentemperatur oberhalb des Siedepunktes gehalten wird,

c) in einer Kondensationsvorrichtung werden die gasförmigen Restmonomere aus den Brüden kondensiert,

dadurch gekennzeichnet,
dass in Schritt c) die Kondensationsvorrichtung bei einem Druck von 1,09 bis 102,4 bar und einer Temperatur von 102 bis 230°C betrieben wird, wobei die minimale Temperatur von 102°C an keinem Punkt der Kondensationsvorrichtung unterschritten wird, und
dass diejenigen Flächen der Kondensationsvorrichtung, die mit den Brüden in Kontakt kommen, mit einem Flüssigkeitsfilm überzogen sind, der kondensierte Restmonomere enthält.

Weiterhin betrifft die Erfindung die Verwendung dieses Verfahrens während der oder im Anschluss an die Herstellung von Polyoxymethylenhomo- oder -copolymeren. Au-ßerdem betrifft die Erfindung ein Verfahren zur Herstellung von Polyoxymethylenhomo- oder -copolymeren, dadurch gekennzeichnet, dass zunächst in einer Monomeranlage geeignete Monomere hergestellt oder bevorratet, dann die Monomere in einem Polymerisationsreaktor zu den genannten Polymeren polymerisiert, und während oder nach dieser Polymerisation die in den Polymeren enthaltenen Restmonomeren nach dem obigen Verfahren entfernt werden.

Schließlich betrifft die Erfindung die Polyoxymethylenhomo- oder -copolymere, erhältlich nach dem letztgenannten Verfahren.

Polyoxymethylenpolymere (POM) werden durch Homo- oder Copolymerisation von 1,3,5-Trioxan (kurz: Trioxan), Formaldehyd oder einer anderen Formaldehydquelle erhalten. Dabei ist der Umsatz üblicherweise nicht vollständig, vielmehr enthält das POM-Rohpolymerisat noch bis zu 40 % nicht umgesetzter Monomere. Solche Restmonomere sind beispielsweise Trioxan und Formaldehyd, sowie ggf. mitverwendete Comonomere wie 1,3-Dioxolan oder Ethylenoxid. Die Restmonomere werden durch Aufarbeitung aus dem Rohpolymeren entfernt.

Die Erfindung geht aus vom Verfahren der DE-A 32 31 797 zur Aufarbeitung von Trioxan aus trioxanhaltigen Oxymethylenpolymeren, das folgenden Schritte aufweist:

A. Abziehen der gasförmigen Trioxanbrüden aus dem Polymeren in einer Entgasungszone bei 70 bis 300°C und 0,005 bis 50 bar,
B. Ableiten der Brüden, wobei die Brüdentemperatur über dem Taupunkt liegt,
C. ggf. Verdichten der Brüden auf über 1 bar,
D. Kondensieren des gasförmigen Trioxan in einer Kondensationszone bei über 1 bar, wobei das nicht kondensierbare Formaldehyd gasförmig abgezogen wird,
E. ggf. Reinigung des Trioxans.

Dieses Verfahren hat den Nachteil, dass das abgezogene Trioxan spontan und unerwünscht polymerisieren kann. Dadurch bilden sich Beläge aus beispielsweise Paraformaldehyd, die bei der Kondensation oder Aufarbeitung des Trioxans die Apparaturen verstopfen, welche dann - nach Abstellung der Produktionsanlage - aufwändig gereinigt werden müssen. Siehe auch Seite 3 Zeile 21 der genannten Schrift, derzufolge an Oberflächen kondensiertes Trioxan eine ausgeprägte Polymerisationsneigung aufweist. Um diese Polymerisation (Polykondensation) zu vermeiden, lehrt die Schrift auf Seite 7 Zeile 15 bis Seite 8 Zeile 5 und in den Beispielen, in der Kondensationszone einen Polymerisationsinhibitor mitzuverwenden, beispielsweise Wasser, Alkohole, Ammoniak oder Amine.

Gemäß der genannten Schrift ist die beabsichtige Wiederverwendung des kondensierten Trioxans zur POM-Herstellung nur dann möglich, wenn der Inhibitor vor der Polymerisationsreaktion durch Zufügen entsprechender Mengen an Polymerisationsinitiator überkompensiert ("überfahren") wird. Diese zusätzliche Initiatorgabe verteuert das Verfahren. Alternativ lehrt die Schrift, dass der Inhibitor auch in aufwändiger Weise durch Ionenaustausch, Extraktion oder Destillation entfernt werden kann, was die Wirtschaftlichkeit des Verfahrens gleichfalls vermindert.

Die Schrift lehrt auf Seite 6 Zeilen 23-24, dass in der Kondensationszone das Restmonomer Formaldehyd nicht kondensiert werden kann, weshalb es gasförmig abgezogen wird. Beim Verfahren der DE-A 32 31 797 fallen demnach die abgetrennten Restmonomere Trioxan und Formaldehyd als zwei verschieden Phasen an (Trioxan flüssig

und Formaldehyd gasförmig), was ihre Rückführung verkompliziert.

Es bestand die Aufgabe, den geschilderten Nachteilen abzuhelfen. Insbesondere sollte ein Verfahren zur Entfernung von Trioxan, Formaldehyd und sonstigen Restmonomeren aus Polyoxymethylenen bereitgestellt werden, das die Polymerisation der kondensierenden Restmonomeren auch ohne Zugabe von Polymerisationsinhibitoren vermeidet. Es sollte also auf Inhibitoren verzichtet werden können.

Außerdem sollte das Verfahren die Abtrennung des Formaldehyds vereinfachen. Insbesondere sollte es ermöglichen, das Formaldehyd zusammen mit dem Trioxan als flüssige Phase zu kondensieren.

Demgemäß wurde das eingangs definierte Verfahren zur Entfernung der Restmonomeren gefunden. Außerdem wurde die genannte Verwendung dieses Verfahrens, das erwähnte Verfahren zur Herstellung der POM-Polymere und die nach dem letztgenannten Verfahren erhältlichen POM-Polymere, gefunden. Bevorzugte Ausführungsformen der Erfindung sind den Unteransprüchen zu entnehmen.

Alle Druckangaben sind Absolutdrucke, sofern nicht anders angegeben.

Die Polyoxymethylenhomo- oder -copolymere (POM), aus denen mit dem erfindungsgemäßen Verfahren die nicht umgesetzten Restmonomere entfernt werden, sind als solche bekannt und handelsüblich. Die Homopolymere werden durch Polymerisation von Formaldehyd oder - bevorzugt - Trioxan hergestellt; bei der Herstellung der Copolymere werden außerdem Comonomere mitverwendet.

Ganz allgemein weisen derartige POM-Polymere mindestens 50 mol-% an wiederkehrenden Einheiten - $CH_2O$- in der Polymerhauptkette auf. Polyoxymethylencopolymere sind bevorzugt, insbesondere solche, die neben den wiederkehrenden Einheiten - $CH_2O$- noch bis zu 50, vorzugsweise 0,1 bis 20, insbesondere 0,3 bis 10 mol-% und ganz besonders bevorzugt 2 bis 6 mol-% an wiederkehrenden Einheiten enthalten,

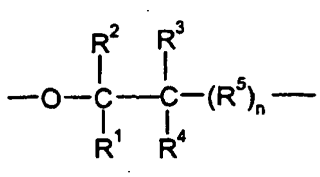

wobei $R^1$ bis $R^4$ unabhängig voneinander ein Wasserstoffatom, eine $C_1$-bis $C_4$-Alkylgruppe oder eine halogensubstituierte Alkylgruppe mit 1 bis 4 C-Atomen und $R^5$ eine - $CH_2$, -$CH_2O$ -, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

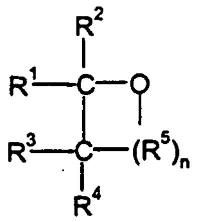

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan (= Butandiolformal, BUFO) als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel

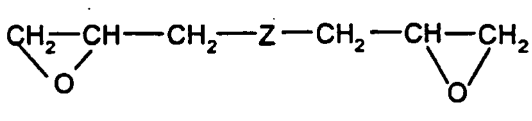

und/oder

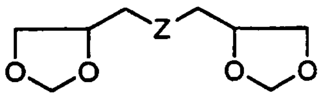

wobei Z eine chemische Bindung, -O-, -ORO- (R=$C_1$- bis $C_8$-Alkylen oder $C_3$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden C-C- oder -O-$CH_3$-Bindungen aufweisen, werden besonders bevorzugt.

Die bevorzugten Polyoxymethylencopolymere haben Schmelzpunkte von mindestens 150 °C und Molekulargewichte (Gewichtsmittelwert) $M_w$ im Bereich von 5.000 bis 300.000, vorzugsweise von 7.000 bis 250.000. Insbesondere bevorzugt sind POM-Copolymerisate mit einer Uneinheitlichkeit ($M_w/M_n$) von 2 bis 15, bevorzugt von 2 bis 9.

Die Messungen erfolgen in der Regel über Gelpermeationschromatographie (GPC) - SEC (size exclusion chromatography), der $M_n$-Wert (Zahlenmittel des Molekulargewichtes) wird im allgemeinen bestimmt mittels GPC-SEC.

Die Molekulargewichte des Polymeren können gegebenenfalls durch die bei der Trioxanpolymerisation üblichen Regler auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10.000 ppm, vorzugsweise von 100 bis 1.000 ppm, eingesetzt.

Als Initiatoren (auch als Katalysatoren bezeichnet) werden die bei der Trioxanpolymerisation üblichen kationischen Starter verwendet. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorpentafluorid und Bortrifluorid sowie deren Komplexverbindungen und salzartige Verbindungen, z.B. Bortrifluorid-Etherate und Triphenylmethylenhexafluorophosphat. Die Initiatoren (Katalysatoren) werden in Mengen von etwa 0,01 bis 1.000 ppm, vorzugsweise 0,01 bis 500 ppm und insbesondere von 0,01 bis 200 ppm eingesetzt. Im allgemeinen empfiehlt es sich, den Initiator in verdünnter Form zuzusetzen, vorzugsweise in Konzentrationen von 0,005 bis 5 Gew.-%. Als Lösungsmittel hierfür können inerte Verbindungen wie aliphatische, cycloaliphatische Kohlenwasserstoffe z.B. Cyclohexan, halogenierte aliphatische Kohlenwasserstoffe, Glykolether usw. verwendet werden. Besonders bevorzugt ist Triglyme als Lösungsmittel (Triethylenglykoldimethylether).

Zusätzlich zu den Initiatoren können Cokatalysatoren mitverwendet werden. Die sind Alkohole jeglicher Art, z.B. aliphatische Alkohole mit 2 bis 20 C-Atomen, wie t-Amylalkohol, Methanol, Ethanol, Propanol, Butanol, Pentanol, Hexanol; aromatische Alkohole mit 2 bis 30 C-Atomen, wie Hydrochinon; halogenierte Alkohole mit 2 bis 20 C-Atomen, wie Hexafluorisopropanol; ganz besonders bevorzugt sind Glykole jeder Art, insbesondere Diethylenglykol und Triethylenglykol; und aliphatische Dihydroxyverbindungen, insbesondere Diole mit 2 bis 6 Kohlenstoffatomen wie 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol.

Monomere, Initiatoren, Cokatalysator und gegebenenfalls Regler können auf beliebige Weise vorgemischt oder auch getrennt voneinander dem Polymerisationsreaktor zugegeben werden. Ferner können die Komponenten zur Stabilisierung sterische gehinderte Phenole enthalten wie in EP-A 129369 oder EP-A 128739 beschrieben.

Vorzugsweise wird direkt anschließend an die Polymerisation die Polymerisationsmischung desaktiviert, vorzugsweise ohne dass eine Phasenveränderung erfolgt. Die Desaktivierung der Initiatorreste (Katalysatorreste) erfolgt in der Regel durch Zugabe von Desaktivatoren zur Polymerisationsschmelze. Geeignete Desaktivatoren sind z.B. Ammoniak sowie primäre, sekundäre oder tertiäre, aliphatische und aromatische Amine, z.B. Trialkylamine wie Triethylamin. Außerdem geeignet sind basisch reagierende Salze, wie Soda und Borax, weiterhin die Carbonate und Hydroxide der Alkali- und Erdalkalimetalle, außerdem auch Alkoholate wie Natriumethanolat. Die Desaktivatoren werden üblicherweise den Polymeren in Mengen von vorzugsweise 0,01 ppmw (parts per million by weight) bis zu 2 Gew.-% zugesetzt. Weiterhin sind Alkali- bzw. Erdalkalialkyle als Desaktivatoren bevorzugt, welche 2 bis 30 C-Atome im Alkylrest aufweisen. Als besonders bevorzugte Metalle seien Li, Mg und Na genannt, wobei n-Butyllithium besonders bevorzugt ist.

POM aus Formaldehyd sind in üblicher Weise durch Polymerisation in der Gasphase, in Lösung, durch Fällungspolymerisation oder in Masse (Substanz) herstellbar. POM aus Trioxan werden in der Regel durch Polymerisation in Masse erhalten, wozu man jegliche Reaktoren mit hoher Mischwirkung verwenden kann. Die Reaktionsführung kann dabei homogen erfolgen, z.B. in einer Schmelze, oder heterogen, z.B. als Polymerisation zu einem Feststoff oder Feststoffgranulat. Geeignet sind beispielsweise Schalenreaktoren, Pflugscharmischer, Rohrreaktoren, Listreaktoren, Kneter (z.B. Busskneter), Extruder mit beispielsweise einer oder zwei Schnecken, und Rührreaktoren, wobei die Reaktoren statische oder dynamische Mischer aufweisen können.

Bei einer Polymerisation in Masse, z.B. in einem Extruder, entsteht durch das aufgeschmolzene Polymer eine sog. Schmelzeabdichtung, wodurch flüchtige Bestandteile im Extruder verbleiben. Man dosiert die vorstehenden Monomere in die im Extruder vorhandene Polymerschmelze, gemeinsam oder getrennt von den Initiatoren (Katalysatoren), bei einer bevorzugten Temperatur der Reaktionsmischung von 62 bis 114°C. Bevorzugt werden auch die Monomere (Trioxan) in geschmolzenem Zustand dosiert, z.B. bei 60 bis 120°C. Aufgrund der exothermen Polymerisationsreaktion muss üblicherweise lediglich beim Start des Verfahrens das Polymer im Extruder aufgeschmolzen werden; anschließend reicht die entstehende Polymerisationswärme aus, um das gebildete POM-Polymer aufzuschmelzen bzw. schmelzflüssig zu halten.

Die Schmelzepolymerisation erfolgt in der Regel bei 1,5 bis 500 bar und 130 bis 300°C, und die Verweilzeit der Polymerisationsmischung im Reaktor beträgt üblicherweise 0,1 bis 20, bevorzugt 0,4 bis 5 min. Vorzugsweise führt man die Polymerisation bis zu einem Umsatz über 30 %, z.B. 60 bis 90 %.

Man erhält in jedem Falle ein Roh-POM, das wie erwähnt erhebliche Anteile, beispielsweise bis zu 40 %, an nicht umgesetzten Restmonomeren enthält, insbesondere Trioxan und Formaldeyhd. Dabei kann Formaldehyd im Roh-POM auch dann vorliegen, wenn nur Trioxan als Monomer eingesetzt wurde, da es als Abbauprodukt des Trioxans entstehen kann. Außerdem können auch andere Oligomere des Formaldehyds vorliegen, z.B. das Tetramere Tetroxan.

In Schritt a) des erfindungsgemäßen Verfahrens werden in einer Entgasungsvorrichtung aus dem Polymeren die Restmonomere als Brüden bei einer Temperatur von 70 bis 300°C und einem Druck von 0,005 bis 50 bar gasförmig abgezogen. Bevorzugt beträgt der Druck 0,005 bis 20, insbesondere 0,05 bis 5 bar.

Bevorzugt wird zur Herstellung des POM Trioxan als Monomer eingesetzt, weshalb die abgezogenen Restmonomere im Wesentlichen Trioxan enthalten, außerdem üblicherweise noch 0,5 bis 10 Gew.-% Tetroxan und 0,1 bis 15 Gew.-% Formaldehyd.

Bevorzugt wird in Schritt a) kein Lösungsmittel oder Extraktionsmittel mitverwendet und kein Inertgas zudosiert. Falls das zu entgasende Roh-POM in fester Form vorliegt, erfolgt die Entgasung bevorzugt in üblichen Feststoffschnekken, Schaufeltrocknern oder Mischern. Die Temperatur in der Entgasungsvorrichtung beträgt bei festem POM vorzugsweise 115 bis 140°C.

Bevorzugt liegt das Roh-POM als Polymerschmelze vor, und in diesem Fall verwendet man als Entgasungsvorrichtungen solche, die eine große Schmelzeoberfläche (Phasengrenzfläche Schmelze/Luft) schaffen, z.B. Ein- oder Mehrschneckenextruder, Kneter oder Entgasungstöpfe (Flash-Töpfe). Die Temperatur beträgt bei einer solchen POM-Schmelze bevorzugt 170 bis 300°C.

In Schritt b) des Verfahrens werden durch eine Brüdenleitung die Restmonomerbrüden abgeleitet, wobei die Brüdentemperatur oberhalb des Siedepunktes gehalten wird, z.B. bei 130 bis 220°C. Die Brüdenleitung führt die Brüden in die Kondensationsvorrichtung, und wird ggf. mittels üblicher Heizvorrichtungen auf die genannte Temperatur temperiert. Wurde die Entgasung in Schritt a) bei mindestens 1 bar vorgenommen, erfolgt der Brüdenabzug entweder durch einen der Kondensationsvorrichtung (Schritt c)) nachgeschalteten Verdichter, oder ohne zusätzliche maschinelle Vorrichtungen durch das zwischen Entgasungs- und Kondensationsvorrichtung herrschende, temperaturbedingte Dampfdruckgefälle.

Sofern in Schritt a) die Entgasung im Vakuum vorgenommen wurde, kann man nach Schritt b) in einem optionalen Schritt b') die abgeleiteten Brüden verdichten, bevor sie in die Kondensationsvorrichtung (Schritt c)) geleitet werden. Bevorzugt verdichtet man auf einen Druck oberhalb 1 bar, insbesondere 1,1 bis 5 bar. Als Verdichter eignen sich übliche Vorrichtungen wie Turboverdichter, Strahlverdichter oder Flüssigkeitsringverdichter. Flüssigkeitsringverdichter werden bevorzugt mit flüssigem Trioxan von 65 bis 115°C als Sperrflüssigkeit betrieben, und man kann Verdichter und Kondensationsvorrichtung zusammenfassen.

Indem die Temperatur der Brüdenleitung zwischen Entgasungs- und Kondensationsvorrichtung stets über dem Siedepunkt der Brüden bei den jeweils vorherrschenden Drücken gehalten wird, kann eine unerwünschte Polymerisation des Trioxans in der Leitung, begünstigt u.a. durch Katalyastorspuren und Formaldehyd, vermieden werden, siehe DE-A 32 31 797.

In Schritt c) des Verfahrens werden in einer Kondensationsvorrichtung die gasförmigen Restmonomere aus den Brüden (durch Abkühlen) kondensiert. Erfindungsgemäß wird die Kondensationsvorrichtung bei einem Druck von 1,09 bis 102,4 bar und einer Temperatur von 102 bis 230°C betrieben wird, wobei die minimale Temperatur von 102°C an keinem Punkt der Kondensationsvorrichtung unterschritten wird. Dabei bedeutet Punkt die räumliche Lage bzw. den Ort.

Überraschenderweise wurde gefunden, dass die unerwünschte Polymerisation der Restmonomeren, insbesondere des Trioxans und des Formaldehyds, in der Kondensationsvorrichtung zuverlässig vermieden werden kann, wenn bei der Kondensation die genannten Druck- und Temperaturbereiche eingehalten werden, und die Kondensationsvorrichtung an jedem Punkt mindestens 102°C heiß ist.

Bevorzugt wird die Kondensationsvorrichtung bei einem Druck von 1,58 bis 14,8 bar, und einer Temperatur von 111 bis 170°C betrieben, besonders bevorzugt bei einem Druck von 2,0 bis 5 bar und einer Temperatur von 120

bis 135°C.

Die genannten Drucke und Temperaturen werden in üblicher Weise eingestellt, z.B. durch Druckregelventile, vor- oder nachgeschaltete Verdichter, bzw. durch geeignete Heiz- oder Kühleinrichtungen, z.B. durch Heiz- oder Kühlmäntel.

Bevorzugt gehorchen die einzuhaltenden Untergrenzen von Druck und Temperatur den folgenden Ungleichungen 1 und 2:

$$T > 18{,}417\,X^2 + 40{,}968\,X + 101{,}93 \qquad (1)$$

$$p > 10^{\left(\frac{-3453}{(T+273{,}15)}+10{,}81\right)}/100 + e^{\left(216{,}1826-\frac{12102{,}17}{(T+273{,}15)}-31{,}09473*\ln(273{,}15+T)+0{,}03070786*(273{,}15+T)\right)}/100000 \qquad (2)$$

Darin bedeuten:

T Temperatur in °C

p Absolutdruck in bar

X gegebener Anteil an gelöstem Formaldehyd im Trioxan, beispielsweise gelöst als molekularer Formaldehyd, als Paraformaldehyd, als sonstige Dimere, Trimere, Tetramere oder andere Oligomere, ausgedrückt als Massenbruch X.

Ebenfalls erfindungsgemäß wird die Kondensationsvorrichtung derart ausgestaltet und betrieben, dass diejenigen Flächen der Kondensationsvorrichtung, die mit den Brüden in Kontakt kommen (nachfolgend kurz als Kontaktflächen bezeichnet), mit einem Flüssigkeitsfilm überzogen sind, der kondensierte Restmonomere enthält.

Dies gewährleisten insbesondere solche Kondensationsvorrichtungen, die keine Totvolumina aufweisen, da die Kontaktfläche im Bereich solcher Totvolumina möglicherweise keinen solchen Flüssigkeitsfilm, oder nur einen lükkenhaften Film, aufweist. Es besteht die Vorstellung, dass sich an solchen nicht benetzten Oberflächen in unerwünschter Weise Paraformaldehyd bildet.

Gut geeignet als Kondensationsvorrichtung ist ein Rohrkondensator. Er ist beispielsweise als ein einfaches Rohr ohne Einbauten ausgeführt, dessen Wandung durch eine Temperiereinrichtung, z.B. einen Heiz- oder Kühlmantel, auf die geeignete Temperatur temperiert wird. Dagegen sind Füllkörperkolonnen oder Kolonnen mit Bodeneinbauten, wie sie in der DE-A 32 31 797 auf Seite 6 Zeilen 26 - 28 genannt werden, im allgemeinen weniger geeignet, da sie störende Totvolumina bzw. nicht benetzte Oberflächen aufweisen können.

Bevorzugt handelt es sich bei der Kondensationsvorrichtung um einen Rohrkondensator, einen Filmkondensator oder einen Wäscherturm. Besonders bevorzugt ist ein außenbeheiztes Rohr, das vorzugsweise keine inneren Einbauten aufweist. Bevorzugt ist das Rohr senkrecht angeordnet, und ebenfalls bevorzugt werden die abgezogenen gasförmigen Restmonomeren von oben in das Rohr eingeleitet. Dort kondensieren sie an der Rohrwandung (= Kontaktfläche) und bilden einen Flüssigkeitsfilm (Kondensat), der nach unten abläuft.

Um die Kondensationsleistung zu verbessern, kann die Abkühlung mit Hilfe von flüssigen Monomeren, z.B. flüssigem Trioxan, erfolgen. Diese flüssigen Monomere können z.B. entweder (bereits kondensierte) Restmonomere, oder erstmals zugefügte, d.h. frische Monomere, oder Mischungen aus Restmonomeren und frischen Monomeren, sein.

Bei der Abkühlung mit flüssigen Monomeren wird flüssiges Trioxan als sog. Quenchtrioxan in die Kondensationsvorrichtung, beispielsweise das Rohr, eingeleitet. Es besteht die Vorstellung, dass sich auf der Kondensatorwandung ein Film aus flüssigem Quenchtrioxan ausbildet, an dem die zu kondensierenden, gasförmigen Restmonomere (Trioxan, Formaldehyd, etc.) kondensieren. Das Quenchtrioxan kann im Gleich- oder Gegenstrom zu den gasförmigen Restmonomeren geführt werden, bevorzugt im Gleichstrom. Man erhält am Auslauf der Kondensationsvorrichtung, also z.B.

am unteren Rohrende, ein Gemisch aus Quenchtrioxan und kondensierten Restmonomeren, das abgezogen wird.

Als Kondensationsvorrichtung ebenfalls bevorzugt sind neben Rohr- und Filmkondensatoren auch Wäschertürme; sie werden auch als Sprühkondensatoren bezeichnet. In letzteren werden Tropfen oder ein Sprühnebel erzeugt, und die Kondensation findet außer an den Kontaktflächen des Turms, auch an den Flüssigkeitstropfen statt. Das Quenchtrioxan kann im Filmkondensator bzw. Wäscherturm im Gleich- oder Gegenstrom geführt werden.

Es versteht sich, dass auch für das Quenchtrioxan die genannten Druck- und Temperaturbedingungen gelten. Insbesondere weist das Quenchtrioxan eine Mindesttemperatur von 102°C auf.

Demnach werden in einer bevorzugten Ausführungsform des Verfahrens in Schritt c) die Brüden durch Inkontaktbringen mit flüssigen Restmonomeren, oder mit einer flüssigen Mischung aus Restmonomeren und frischen Monomeren, kondensiert.

Die Abkühlung mittels Quenchtrioxan kann in offener oder geschlossener Fahrweise erfolgen. Bei offener Fahrweise wird das Gemisch aus kondensierten Restmonomeren und zugesetztem Quenchtrioxan aus der Kondensationsvorrichtung vollständig abgezogen und ggf. weiteren Verfahrensschritten zugeführt, beispielsweise einer Reinigung, siehe weiter unten.

Bei der - bevorzugten - geschlossenen Fahrweise wird ein Teil der aus der Kondensationsvorrichtung abgezogenen Mischung abgezweigt, auf die erforderliche Temperatur abgekühlt, beispielsweise mittels eines Wärmetauschers, und als Quenchtrioxan im Kreis wieder in die Kondensationsvorrichtung eingeführt, wobei man erforderlichenfalls frisches Trioxan zudosieren kann. Beispielsweise kann man einen Teil des am unteren Rohrende abgezogenen Gemisches aus Quench- und kondensiertem Trioxan abkühlen und wieder dem oberen Rohranfang zuführen.

Es wurde überraschend gefunden, dass bei erfindungsgemäßer Ausgestaltung der Kondensation sich auch die Restmonomere Formaldehyd und andere leichtsiedende Verbindungen, in einfacher Weise als Flüssigkeit und nicht etwa als Gas abtrennen lassen. Dies konnte nicht erwartet werden, da die DE-A 32 31 797 auf Seite 6 Zeilen 23-24 und Seite 7 Zeilen 6-13 lehrt, dass Formaldehyd nur gasförmig abgezogen werden kann. Es wird vermutet, dass unter den erfindungsgemäßen Bedingungen das Formaldehyd bzw. die anderen Leichtsieder am flüssigen Trioxanfilm kondensieren bzw. sich im flüssigen Trioxan lösen.

Bei dem erfindungsgemäßen Verfahren sind beim Kondensationsschritt c) bevorzugt und im Gegensatz zur genannten Schrift keinerlei Inhibitoren erforderlich, um eine Polymerisation der abgetrennten Restmonomeren in der Kondensationsvorrichtung zu verhindern. Bevorzugt muss also vor oder während der Kondensation weder Wasser noch ein anderer Inhibitor zugegeben werden. Besonders bevorzugt werden auch in Schritten a) und b), Entgasung und Brüdenableitung, keine Inhibitoren zugefügt. Dem steht nicht entgegen, dass bei der Herstellung des Roh-POM Inhibitoren mitverwendet werden können. Ebenso soll in dieser bevorzugten Ausführungsform ein sehr geringer Wassergehalt des Trioxans von bis zu 15 ppm by weight, wie er bei dem in großtechnischen POM-Verfahren eingesetzten Trioxan üblich ist, nicht ausgeschlossen sein; derart geringe Wassermengen wirken in der Regel nicht inhibierend. Demnach ist das Verfahren bevorzugt dadurch gekennzeichnet, dass nach Schritt b) oder in Schritt c) keine Inhibitoren zugefügt werden, die eine Polymerisation der Restmonomeren verhindern würden. Dies vereinfacht das Verfahren erheblich und macht es kosengüstiger, da kein Inhibitor in aufwändiger Weise wieder entfernt werden muss, bzw. durch zusätzliche Initiatormengen überkompensiert werden muss.

Umso erstaunlicher ist, dass trotz des Fehlens von beispielsweise Wasser als Inhibitor auch das Formaldehyd wie beschrieben kondensiert werden kann. Im Verfahren gemäß der DE-A 32 31 797 enthält das Quenchtrioxan Wasser als Inhibitor und der Fachmann weiß z.B. aus Walker, Formaldehyde, Am. Chem. Soc. Monograph Series No. 159, 3rd ed., Reinhold New York 1964, dass sich Formaldehyd in Wasser sehr gut löst. Daher konnte man nicht erwarten, dass sich Formaldehyd auch in Abwesenheit von Wasser, als flüssige Phase abtrennen lässt, wie dies beim erfindungsgemäßen Verfahren der Fall ist.

Vorstehend steht Trioxan stellvertretend auch für die anderen, genannten Restmonomere wie Formaldehyd etc. Bevorzugt sind die Restmonomere ausgewählt aus Trioxan, Formaldehyd, Tetroxan, 1,3-Dioxolan, 1,3-Dioxepan, Ethylenoxid und Oligomeren des Formaldehyds.

Die erfindungsgemäße Ausgestaltung der Kondensation in Schritt c) verhindert zuverlässig die unerwünschte Polymerisation der Restmonomeren. Auch falls in der Entgasungsvorrichtung Polymerisationsinitiator mitgerissen wurde, was sich nicht immer vermeiden lässt, und auf diese Weise in die Kondensationsvorrichtung gelangt, stört er dort nicht. Vermutlich löst sich bei der erfindungsgemäß ausgestalteten Kondensation ein Polymerisat, das sich ggf. in der Kondensationsvorrichtung bildet, im Kondensat, anstatt feste Beläge zu bilden. Daher können bei der Polymerisation auch flüchtige, leichter mitreißbare Initiatoren verwendet werden und man ist nicht auf den Einsatz schwerflüchtiger Initiatoren beschränkt.

Die in Schritt c) abgetrennten Restmonomeren werden in üblicher Weise abgezogen und können bevorzugt unmittelbar, d.h. ohne weitere Aufarbeitung als solche weiterverwendet werden. Jedoch kann man, falls erforderlich, die in Schritt c) erhaltenen kondensierten Restmonomere in einer Reinigungsvorrichtung reinigen. Dies kann in an sich bekannte Reinigungs- bzw. Trennoperationen erfolgen, beispielsweise durch Destillation, Rektifikation, Pervaporation, Sublimation, Kristallisation, Adsorption, Absorption, Chemisorption, Thermodiffusion, Eindicken, Einengen, Eindampfen,

Trocken, Gefriertrocknen, Ausfrieren, Kondensation, Schmelzen, Elektrophorese, Ionenaustausch, Chromatographie, Komplexierung, Chelatisierung, usw. Durch den bevorzugten Verzicht auf Inhibitoren wie Wasser etc. vereinfacht sich die Reinigung, falls sie überhaupt erforderlich sein sollte, jedoch erheblich.

Weiterer Gegenstand der Erfindung ist die Verwendung des vorstehend beschriebenen Verfahrens zur Restmonomerabtrennung (nachfolgend "Abtrennungsverfahren") während der oder im Anschluss an die Herstellung von Polyoxymethylenhomo- oder - copolymeren (kurz: POM).

Bei der Herstellung von POM werden üblicherweise zunächst in einer sog. Monomeranlage geeignete Monomere hergestellt, z.B. Trioxan aus Formaldehyd, und/oder geeignete Monomere bevorratet. Danach werden die Monomere aus der Monomeranlage in einen Polymerisationsreaktor überführt und dort zum POM polymerisiert, wie es weiter oben bereits beschrieben wurde. Man erhält das beschriebene Roh-POM, aus dem die nicht umgesetzten Restmonomeren mit dem erfindungsgemäßen Abtrennungsverfahren abgetrennt werden. Ebenso kann man bereits während der Polymerisation zum POM, Restmonomere nach dem erfindungsgemäßen Abtrennungsverfahren abtrennen, oder man führt diese erfindungsgemäße Restmonomerabtrennung sowohl während als auch nach der Polymerisation durch.

Weiterer Erfindungsgegenstand ist demnach auch ein Verfahren (nachfolgend "POM-Verfahren") zur Herstellung von Polyoxymethylenhomo- oder -copolymeren, dadurch gekennzeichnet, dass zunächst in einer Monomeranlage geeignete Monomere hergestellt oder bevorratet, dann die Monomere in einem Polymerisationsreaktor zu den genannten Polymeren polymerisiert, und während oder nach dieser Polymerisation die in den Polymeren enthaltenen Restmonomeren nach dem obigen Abtrennungsverfahren entfernt werden. Natürlich kann man die Restmonomeren auch während und nach der Polymerisation entfernen.

Das erfindungsgemäße POM-Verfahren beinhaltet als einen Verfahrensschritt demnach das erfindungsgemäße Abtrennungsverfahren.

Üblicherweise wird das erhaltene Roh-POM in einem Extruder oder einer anderen geeigneten Mischvorrichtung mit üblichen Zusatzstoffen und Verarbeitungshilfsmitteln (Additiven) in den für diese Stoffe üblichen Mengen versehen. Solche Additive sind z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

In einer bevorzugten Ausführungsform i) werden die Restmonomere bereits nach der Herstellung des Roh-POM, also noch vor der Zugabe der Additive auf dem Extruder, mit dem erfindungsgemäßen Abtrennungsverfahren von den Restmonomeren befreit, z.B. indem man das den Polymerisationsreaktor verlassende Roh-POM in einen Entgasungstopf (Flashtopf) fördert und dort die Restmonomere erfindungsgemäß abtrennt.

In einer anderen bevorzugten Ausführungsform ii) wird das Roh-POM erst bei der Zugabe der Additive auf dem Extruder bzw. der sonstigen Mischvorrichtung, mit dem erfindungsgemäßen Abtrennungsverfahren von den Restmonomeren befreit. Dabei kann die Mischvorrichtung zur Zugabe der Additive identisch sein mit der Entgasungsvorrichtung, die in Schritt a) des Abtrennungsverfahrens verwendet wird. Beispielsweise kann man auf demselben Extruder sowohl die Additive einmischen als auch Schritt a) des Abtrennungsverfahrens durchführen, also die Restmonomere als Brüden gasförmig abziehen.

Insbesondere kann man das Roh-POM aus dem Polymerisationsreaktor zunächst in einem Entgasungstopf fördern und dort die Restmonomere erfindungsgemäß abtrennen, und/oder danach das POM auf einem Extruder mit den Additiven versehen und zugleich die Restmonomere erfindungsgemäß abtrennen. Die vorstehenden Ausführungsformen i) und ii) können also kombiniert werden.

Die durch das Abtrennungsverfahren entfernten Restmonomere können - ggf. nach der beschriebenen, jedoch bevorzugt nicht erforderlichen Reinigung - erneut bei der POM-Herstellung als Einsatzstoffe verwendet werden, also im erfindungsgemäßen POM-Verfahren zurückgeführt (recycliert) werden. Dabei kann man den Zielpunkt dieser Rückführung der Produktionsanlage anpassen. Beispielsweise kann man die Restmonomere unmittelbar in den Polymerisationsreaktor oder in dessen Zulauf zurückführen, oder sie in die Monomeranlage zurückführen.

Folglich ist das POM-Verfahren bevorzugt dadurch gekennzeichnet, dass die entfernten Restmonomeren in den Polymerisationsreaktor oder in die Monomeranlage zurückgeführt werden. Natürlich kann man diese beiden Varianten auch kombinieren.

Das erfindungsgemäße Abtrennungsverfahren entfernt Trioxan, Formaldehyd und sonstige Restmonomeren aus Polyoxymethylenen und vermeidet bei der Kondensation die unerwünschte Polymerisation der kondensierenden Restmonomeren auch ohne Zugabe von Polymerisationsinhibitoren. Außerdem vereinfacht es die Abtrennung des Formaldehyds, welches wie das Trioxan als flüssige Phase kondensiert werden kann. Damit ist das erfindungsgemäße Abtrennungsverfahren apparativ einfacher und kostengünstiger zu betreiben.

Beispiele:

Das folgende Vergleichsbeispiel 1 entspricht Beispiel 2 aus der DE-A 32 31 797

Vergleichsbeispiel 1 (Stand der Technik)

Pulverförmiges desaktiviertes POM-Copolymerisat mit einem Gehalt von ca. 34 % nicht umgesetzten Monomeren wird in einer Feststoffförderschnecke bei ca. 1,01 bar und 130 °C kontinuierlich entgast. Die Verweilzeit des Rohpolymerpulvers in der Feststoffschnecke beträgt ca. 15 Minuten. Nach der Entgasung beträgt der Gehalt des Rohpolymeren an flüchtigen Anteilen noch ca. 2,5 %, der in der anschließenden Konfektionierung auf die notwendigen Spezifikationswerte weiter abgesenkt wird. Die aus der Entgasungszone abgezogenen Brüden bestehen aus ca. 82 % Trioxan, Tetroxan und weiteren ringförmigen Oligomeren des Formaldehyds, Acetalen und ca. 8 % Formaldehyd. Die Brüdenleitung wird bei 135 °C gehalten. In einem Turboverdichter werden die Brüden auf ca. 2 bar verdichtet und einer Kondensationszone zugeführt. Der Verdichter und die Brüdenleitung bis zur Kondensationszone sind bei 150 °C temperiert.

Die Kondensationszone ist als Füllkörperkolonne ausgeführt. Den mit einer Temperatur von 135 °C in die Füllkörperkolonne eintretenden Brüden strömt Quenchtrioxan, versetzt mit 2000 ppm Wasser als Inhibitor, in einem Massenverhältnis von ca. 20:1 entgegen. Das Quenchtrioxan wird dem Kopf der Kolonne mit ca. 75 °C zugeführt und verlässt die Kolonne, zusammen mit dem aus den Brüden niedergeschlagenen Trioxananteil mit ca. 95 °C. Die nicht kondensierten bzw. gelösten Anteile in Höhe von ca. 3 %, bezogen auf die eingesetzte Brüdenmenge, verlassen die Füllkörperkolonne am Kolonnenkopf und werden durch eine übliche Wasserwäsche zurückgewonnen.

Eine der kondensierten Brüdenmenge entsprechende Menge Trioxan wird aus dem Quenchkreislauf zur Weiterverarbeitung abgezweigt. Dieses Trioxan hat einen Gehalt von 99,8 % polymerisierbaren Anteilen und wird in einer Aufarbeitung durch Destillation oder Extraktion bis auf Polymerisationsqualität gereinigt.

Das Kreislauftrioxan wird in einem Kühler auf die Kolonnenkopfzulauftemperatur von ca. 75 °C abgekühlt. Es tritt keine Belagsbildung auf.

Der genannte Wassergehalt des Quenchtrioxans von 2000 ppm ergibt sich aus dem Gehalt des Trioxans von 99,8 %: 100 % - 99,8 % = 0,2 % ≡ 2000 ppm.

Das Vergleichsbeispiel zeigt, dass die Mitverwendung von Wasser als Inhibitor zwar die Polymerisation bei der Kondensation verhindert, jedoch das Wasser aus dem abgetrennten Trioxan in aufwändiger Weise durch Destillation und Extraktion entfernt werden muss, bevor man das Trioxan wieder in der Polymerisation verwenden kann.

Vergleichsbeispiel 2: Weglassen des Inhibitors

Es wurde vorgegangen wie in Beispiel 1 beschrieben, jedoch wurde als Quenchtrioxan ein Trioxan verwendet, dass kein Wasser als Inhibitor enthielt (abgesehen von einem unvermeidbaren Spurengehalt von maximal 15 ppm Wasser, der jedoch nicht inhibierend wirkt). Nach wenigen Minuten bildeten sich Beläge in der Kondensationszone. Nach insgesamt 30 min war die Kondensationszone verstopft und die Anlage musste abgeschaltet werden.

Das Beispiel zeigt, dass das aus der DE-A 32 31 797 bekannte Verfahren ohne Inhibitor nicht durchführbar ist.

Die folgenden Beispiele sind erfindungsgemäß.

Beispiel 3:

Es wurde vorgegangen wie in Beispiel 2 beschrieben, also inhibitorfreies Quenchtrioxan verwendet, jedoch mit folgenden Unterschieden zu Beispiel 2:

Die Brüden wurden aus der Entgasungszone direkt über eine Brüdenleitung (ohne Verdichter) einer Kondensationsvorrichtung zugeführt. Der Druck in der Entgasungszone, der Brüdenleitung sowie der Kondensationsvorrichtung betrug ca. 4 bar.

Die Kondensationsvorrichtung war keine Füllkörperkolonne, sondern ein Rohrkondensator, ausgeführt als senkrecht stehendendes Rohr von 200 cm Länge und 10 cm Innendurchmesser, das keine Einbauten aufwies und mit einem Heizmantel versehen war. Die zu kondensierenden Brüden leitete man am oberen Ende in das Rohr ein, ebenso das Quenchtrioxan, wobei das Massenverhältnis Quenchtrioxan : Brüden (sog. Quenchverhältnis) etwa 100 : 1 betrug.

Das Rohr wurde auf 105°C beheizt, die Temperatur des Quenchtrioxans betrug ebenfalls 105°C.

Am unteren Rohrende zog man eine Mischung aus Quenchtrioxan und kondensierten Brüden, enthaltend Trioxan, Formaldehyd und alle leichtflüchtigen Bestandteile, ab. Die Temperatur dieser Mischung betrug 105°C. Am oberen Rohrende wurden keine Stoffe gasförmig abgezogen.

Ein der kondensierten Brüdenmenge entsprechender Teil der abgezogenen Mischung wurde ohne weitere Reinigung zur Weiterverwendung als Monomere in der POM-Herstellung abgezweigt, der restliche Teil wurde als Quenchtrioxan wieder der Kondensationsvorrichtung zugeführt (Quenchkreislauf).

Die Anlage wies auch nach 24 Stunden Betrieb keinerlei Belagsbildung auf.

Beispiel 4:

Es wurde vorgegangen wie in Beispiel 3, jedoch mit folgenden Unterschieden: das Massenverhältnis Quenchtrioxan : Brüden (sog. Quenchverhältnis) betrug etwa 20 : 1. Die Temperatur der am unteren Rohrende abgezogenen Mischung betrug 115°C.

Ein der kondensierten Brüdenmenge entsprechender Teil der abgezogenen Mischung wurde ohne weitere Reinigung zur Weiterverwendung als Monomere in der POM-Herstellung abgezweigt, der restliche Teil wurde auf 105°C gekühlt und als Quenchtrioxan wieder der Kondensationsvorrichtung zugeführt (Quenchkreislauf).

Auch bei diesen Bedingungen bildeten sich in der Anlage nach 24 Stunden keine Beläge.

Beispiel 5:

Pulverförmiges, nicht deaktiviertes POM-Copolymerisat mit einem Gehalt von ca. 34 % nicht umgesetzten Monomeren wurde analog Beispiel 1 kontinuierlich entgast. Nach der Entgasung betrug der Gehalt des Rohpolymeren an flüchtigen Anteilen noch ca. 3 %. Die aus der Entgasungszone abgezogenen Brüden enthielten ca. 80 % Trioxan, Tetroxan und weitere ringförmigen Oligomere des Formaldehyds, Acetale und ca. 10 % Formaldehyd. Die Brüdenleitung wurde bei 150 °C gehalten. In einem Turboverdichter wurden die Brüden auf ca. 9 bar verdichtet und einer Kondensationszone zugeführt. Der Verdichter und die Brüdenleitung bis zur Kondensationsvorrichtung waren auf 150°C temperiert.

Die Kondensationsvorrichtung war als Rohrkondensator ausgeführt. Die zu kondensierenden Brüden leitete man am oberen Ende in den Kondensator ein, ebenso das inhibitorfreie Quenchtrioxan. Die Brüdentemperatur betrug 200 °C, diejenige des Quenchtrioxans 130°C. Das Quenchverhältnis betrug ca. 100 : 1. Aus dem Kondensator wurde eine Mischung aus Quenchtrioxan und kondensierten Brüden abgezogen, wobei die Temperatur der Mischung 133°C betrug. Am oberen Rohrende wurden keine Stoffe gasförmig abgezogen.

Ein der kondensierten Brüdenmenge entsprechender Teil der abgezogenen Mischung wurde ohne weitere Reinigung zur Weiterverwendung als Monomere in der POM-Herstellung bei 133°C unter Druck abgezweigt, der restliche Teil wurde auf 130°C gekühlt und als Quenchtrioxan wieder der Kondensationsvorrichtung zugeführt (Quenchkreislauf).

Nach 24 Stunden Betrieb wurde keine Belagsbildung oder Verstopfung beobachtet.

Beispiel 6:

Eine POM-Rohpolymerschmelze mit einem Gehalt von ca. 38 % nicht umgesetzten Monomeren wurde in einem Zweischneckenextruder ZSK 28 von Fa. Coperion bei 240°C und 0,2 bar bis auf einen Restgehalt von ca. 0,3 % flüchtige Anteile entgast. Die Brüden, enthaltend ca. 84 % Trioxan, andere Oligomere des Formaldehyds, Acetale und ca. 6 % Formaldehyd sowie mitgerissene Rohpolymerschmelzetröpfchen, wurden über eine, auf 180 °C temperierte Brüdenleitung einem Turboverdichter zugeführt, in dem sie auf 15 bar verdichtet wurden. Der Turboverdichter und die anschließende Brüdenleitung bis zur Kondensationsvorrichtung waren auf 200 °C temperiert.

Die Kondensationsvorrichtung war als Rohrkondensator ausgeführt. Die zu kondensierenden Brüden leitete man am oberen Ende in den Kondensator ein, ebenso das inhibitorfreie Quenchtrioxan. Die Brüdentemperatur betrug 185°C, diejenige des Quenchtrioxans 125°C. Das Quenchverhältnis betrug ca. 100 : 1. Aus dem Kondensator wurde eine Mischung aus Quenchtrioxan und kondensierten Brüden abgezogen, wobei die Temperatur der Mischung 128°C betrug. Am oberen Rohrende wurden keine Stoffe gasförmig abgezogen.

Ein der kondensierten Brüdenmenge entsprechender Teil der abgezogenen Mischung wurde ohne weitere Reinigung zur Weiterverwendung als Monomere in der POM-Herstellung bei 128°C unter Druck abgezweigt, der restliche Teil wurde auf 125°C gekühlt und als Quenchtrioxan wieder der Kondensationsvorrichtung zugeführt (Quenchkreislauf).

Nach 24 Stunden Betrieb trat keine Belagsbildung oder Verstopfung auf.

Bei der POM-Herstellung wurde aus 95,5 Gew.-% Trioxan und 4,5 Gew.-% 1,3-Dioxepan mit 0,2 ppm by weight Trifluormethansulfonsäure als Initiator ein Polyoxymethylen hergestellt, wobei der Umsatz 73 % betrug. Das Polymer wurde auf einem Extruder ZSK 30 bei 220°C und 50 mbar wie beschrieben entgast und mit Irganox® 245 (Ethylen-bis (oxyethylen)bis[3-(5-tert-butyl-4-hydroxy-m-tolyl)propionat], CAS 036443-68-2) von Fa. Ciba als Stabilisator versehen.

Der Schmelzindex MFI des Polymeren, ermittelt nach DIN EN ISO 1133 bei 190°C Schmelzetemperatur und 2,16 kg Nennlast, betrug 2,8 g/10 min.

Die thermische Stabilität des Polymers nach bei zweistündiger Lagerung in Stickstoff bei 220°C, betrug 99,78 %

Beispiel 7:

Eine POM-Rohpolymerschmelze mit einem Gehalt von ca. 38 % nicht umgesetzten Monomeren wurde in einen Entgasungstopf (Flashtopf) entspannt. Die Temperatur im Entgasungstopf betrug 170 bis 180°C, der Druck etwa 4 bar. Die Brüden, enthaltend ca. 84 % Trioxan, andere Oligomere des Formaldehyds, Acetale und ca. 6 % Formaldehyd

wurden über eine auf 180 °C temperierte Brüdenleitung einer Kondensationsvorrichtung zugeführt.

Die Kondensationsvorrichtung war als Filmkondensator ausgeführt. Die mit einer Temperatur von ca. 175 °C in den Kondensator eintretenden Brüden kondensierten an einem Film aus Quenchtrioxan, der auf der Oberfläche des Kondensators ablief. Das Quenchtrioxan wurde dem Kopf des Kondensators mit ca. 135 °C zugeführt. Das Quenchverhältnis betrug 100 : 1. Aus dem Kondensator wurde eine Mischung aus Quenchtrioxan und kondensierten Brüden abgezogen, wobei die Temperatur der Mischung 137°C betrug. Es wurden keine Stoffe gasförmig abgezogen.

Ein der kondensierten Brüdenmenge entsprechender Teil der abgezogenen Mischung wurde ohne weitere Reinigung zur Weiterverwendung als Monomere in der POM-Herstellung bei 137°C unter Druck abgezweigt, der restliche Teil wurde auf 135°C gekühlt und als Quenchtrioxan wieder der Kondensationsvorrichtung zugeführt (Quenchkreislauf).

Nach 24 Stunden Betrieb trat keine Belagsbildung oder Verstopfung auf.

Bei der POM-Herstellung wurde aus 95,5 Gew.-% Trioxan und 4,5 Gew.-% 1,3-Dioxepan mit 0,2 ppm by weight Trifluormethansulfonsäure als Initiator ein Polyoxymethylen hergestellt, wobei der Umsatz 73 % betrug. Das Polymer wurde auf einem Extruder ZSK 30 bei 220°C und 70 mbar wie beschrieben entgast und mit Irganox® 245 (CAS 036443-68-2) von Fa. Ciba als Stabilisator versehen.

Der Schmelzindex MFI des Polymeren, ermittelt nach DIN EN ISO 1133 bei 190°C Schmelzetemperatur und 2,16 kg Nennlast, betrug 4,9 g/10 min.

Die thermische Stabilität des Polymers bei zweistündiger Lagerung in Stickstoff bei 220°C, betrug 98,24 %

Die erfindungsgemäßen Beispiele 3 bis 7 zeigen, dass mit dem erfindungsgemäßen Abtrennungsverfahren sich die Restmonomeren problemlos abtrennen ließen. Insbesondere traten an der Kondensationsvorrichtung auch nach 24 Stunden keine Beläge oder Verstopfungen auf, obwohl kein Inhibitor mitverwendet wurde. Auch das Formaldehyd konnte auf einfache Weise mit abgetrennt weren.

Die Beispiele 6 und 7 illustrieren außerdem das ebenfalls erfindungsgemäße Verfahrens zur POM-Herstellung (POM-Verfahren), dessen Bestandteil das Abtrennungsverfahren ist.

## Patentansprüche

1. Verfahren zur Entfernung von nicht umgesetzten Restmonomeren aus Polyoxymethylenhomo- oder -copolymeren mit folgenden Verfahrensschritten:

   a) in einer Entgasungsvorrichtung werden aus dem Polymeren die Restmonomere als Brüden bei einer Temperatur von 70 bis 300°C und einem Druck von 0,005 bis 50 bar gasförmig abgezogen,
   b) durch eine Brüdenleitung werden die Restmonomerbrüden abgeleitet, wobei die Brüdentemperatur oberhalb des Siedepunktes gehalten wird,
   c) in einer Kondensationsvorrichtung werden die gasförmigen Restmonomere aus den Brüden kondensiert,

   **dadurch gekennzeichnet,**
   **dass** in Schritt c) die Kondensationsvorrichtung bei einem Druck von 1,09 bis 102,4 bar und einer Temperatur von 102 bis 230°C betrieben wird, wobei die minimale Temperatur von 102°C an keinem Punkt der Kondensationsvorrichtung unterschritten wird, und
   **dass** diejenigen Flächen der Kondensationsvorrichtung, die mit den Brüden in Kontakt kommen, mit einem Flüssigkeitsfilm überzogen sind, der kondensierte Restmonomere enthält.

2. Verfahren nach Anspruch 1, **dadurch gekennzeichnet, dass** als Kondensationsvorrichtung ein Rohrkondensator, ein Filmkondensator oder ein Wäscherturm verwendet wird.

3. Verfahren nach den Ansprüchen 1 bis 2, **dadurch gekennzeichnet, dass** in Schritt c) die Brüden durch Inkontaktbringen mit flüssigen Restmonomeren, oder mir einer flüssigen Mischung aus Restmonomeren und frischen Monomeren, kondensiert werden.

4. Verfahren nach den Ansprüchen 1 bis 3, **dadurch gekennzeichnet, dass** nach Schritt b) oder in Schritt c) keine Inhibitoren zugefügt werden, die eine Polymerisation der Restmonomeren verhindern würden.

5. Verfahren nach den Ansprüchen 1 bis 4, **dadurch gekennzeichnet, dass** die Restmonomere ausgewählt sind aus Trioxan, Formaldehyd, Tetroxan, 1,3-Dioxolan, 1,3-Dioxepan, Ethylenoxid und Oligomeren des Formaldehyds.

6. Verwendung des Verfahrens gemäß den Ansprüchen 1 bis 5 während der oder im Anschluss an die Herstellung von Polyoxymethylenhomo- oder -copolymeren.

7. Verfahren zur Herstellung von Polyoxymethylenhomo- oder -copolymeren, **dadurch gekennzeichnet, dass** zunächst in einer Monomeranlage geeignete Monomere hergestellt oder bevorratet, dann die Monomere in einem Polymerisationsreaktor zu den genannten Polymeren polymerisiert, und während oder nach dieser Polymerisation die in den Polymeren enthaltenen Restmonomeren nach dem Verfahren gemäß den Ansprüchen 1 bis 5 entfernt werden.

8. Verfahren nach Anspruch 7, **dadurch gekennzeichnet, dass** die entfernten Restmonomeren in den Polymerisationsreaktor oder in die Monomeranlage zurückgeführt werden.

## Claims

1. A process for removing unconverted residual monomers from polyoxymethylene homo- or copolymers, comprising the following process steps:

   a) the residual monomers are removed in gaseous form as vapors at a temperature of from 70 to 300°C and a pressure of from 0.005 to 50 bar from the polymer in a devolatilization apparatus,
   b) the residual monomer vapors are removed through a vapor pipe, the vapor temperature being kept above the boiling point,
   c) the gaseous residual monomers are condensed from the vapors in a condensation apparatus,

   wherein
   in step c), the condensation apparatus is operated at a pressure of from 1.09 to 102.4 bar and a temperature of from 102 to 230°C, the temperature not falling below the minimum temperature of 102°C at any point in the condensation apparatus, and
   wherein those surfaces of the condensation apparatus which come into contact with the vapors are coated with a liquid film which comprises condensed residual monomers.

2. The process according to claim 1, wherein the condensation apparatus used is a tubular condenser, a film condenser or a scrubber tower.

3. The process according to either of claims 1 and 2, wherein, in step c), the vapors are condensed by being brought into contact with liquid residual monomers or with a liquid mixture comprising residual monomers and fresh monomers.

4. The process according to any of claims 1 to 3, wherein no inhibitors which would prevent polymerization of the residual monomers are added after step b) or in step c).

5. The process according to any of claims 1 to 4, wherein the residual monomers are selected from trioxane, formaldehyde, tetroxane, 1,3-dioxolane, 1,3-dioxepan, ethylene oxide and oligomers of formaldehyde.

6. The use of the process according to any of claims 1 to 5 during or after the preparation of polyoxymethylene homo- or copolymers.

7. A process for the preparation of polyoxymethylene homo- or copolymers, wherein first suitable monomers are prepared or stored in a monomer plant, the monomers are then polymerized to said polymers in a polymerization reactor and, during or after this polymerization, the residual monomers present in the polymers are removed by the process according to any of claims 1 to 5.

8. The process according to claim 7, wherein the residual monomers removed are recycled to the polymerization reactor or to the monomer plant.

## Revendications

1. Procédé pour éliminer les monomères résiduels non transformés d'homopolymères ou de copolymères de polyoxyméthylène comprenant les étapes suivantes :

a) dans un dispositif de dégazage, les monomères résiduels en vapeurs sont soustraits sous forme de gaz aux polymères à une température de 70 à 300°C et à une pression de 0,005 à 50 bar.
b) les vapeurs de monomères résiduels sont évacuées par une conduite de vapeurs, la température des vapeurs étant maintenue au-dessus du point d'ébullition,
c) dans un dispositif de condensation, les monomères résiduels sous forme de gaz sont condensés hors des vapeurs,

**caractérisé en ce que**
dans l'étape c), le dispositif de condensation fonctionne à une pression de 1,09 à 102,4 bar et à une température de 102 à 230°C, le dispositif de condensation ne passant à aucun moment sous la température minimale de 102°C, et **en ce que**
les surfaces du dispositif de condensation qui sont en contact avec les vapeurs sont recouvertes d'un film de liquide qui comprend les monomères résiduels condensés.

2. Procédé selon la revendication 1, **caractérisé en ce qu'**un condensateur tubulaire, un condensateur à couche ou une tour de lavage sont utilisés comme dispositif de condensation.

3. Procédé selon les revendications 1 à 2, **caractérisé en ce que** dans l'étape c), les vapeurs sont condensées par la mise en contact avec les monomères résiduels liquides, ou avec un mélange liquide de monomères résiduels et de monomères nouveaux.

4. Procédé selon les revendications 1 à 3, **caractérisé en ce qu'**après l'étape b) ou dans l'étape c), aucun inhibiteur n'est ajouté qui empêcherait une polymérisation des monomères résiduels.

5. Procédé selon les revendications 1 à 4, **caractérisé en ce que** les monomères résiduels sont sélectionnés parmi le trioxane, le formaldéhyde, le tétroxane, le 1,3-dioxolane, le 1,3-dioxépane, l'oxyde d'éthylène et les oligomères du formaldéhyde.

6. Utilisation du procédé selon les revendications 1 à 5 pendant ou à la suite de la production d'homopolymères ou de copolymères de polyoxyméthylène.

7. Procédé de production d'homopolymères ou de copolymères de polyoxyméthylène, **caractérisé en ce que** des monomères déterminés sont au préalable produits ou apportés dans une installation de monomères, **en ce que** les monomères sont ensuite polymérisés sous la forme des polymères cités dans un réacteur de polymérisation, et **en ce que** pendant ou après cette polymérisation, les monomères résiduels contenus dans les polymères sont éliminés par le procédé selon les revendications 1 à 5.

8. Procédé selon la revendication 7, **caractérisé en ce que** les monomères résiduels éliminés sont ramenés dans le réacteur de polymérisation ou dans l'installation de monomères.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3231797 A
- EP 129369 A
- EP 128739 A


### In der Beschreibung aufgeführte Nicht-Patentliteratur


- **WALKER ; FORMALDEHYDE.** Am. Chem. Soc. Monograph Series No. 159. 1964